Europäisches Patentamt

(19) European Patent Office

Office européen des brevets

(11) Publication number: 0 116 770
B1

## (12) EUROPEAN PATENT SPECIFICATION

(45) Date of publication of patent specification: 06.05.87    (51) Int. Cl.⁴: B 67 D 3/04

(21) Application number: 83307738.1

(22) Date of filing: 20.12.83

(54) Tap.

(30) Priority: 24.01.83 GB 8301862
06.09.83 GB 8323860

(43) Date of publication of application:
29.08.84 Bulletin 84/35

(45) Publication of the grant of the patent:
06.05.87 Bulletin 87/19

(84) Designated Contracting States:
AT BE CH DE FR IT LI LU NL SE

(56) References cited:
DE-A-2 011 660
FR-A-1 038 027
GB-A-1 381 391
US-A-3 519 014
US-A-4 325 496
US-A-4 355 737

(73) Proprietor: ANDREWSON LIMITED
17 Upland Road
Bexleyheath Kent DA7 4PL (GB)

(72) Inventor: Neave, Andrew John
73 Lewisham Park
Lewisham London SE13 6QJ (GB)

(74) Representative: Jones, Graham H.
Graham Jones & Company 77 Beaconsfield
Road Blackheath
London SE3 7LG (GB)

Courier Press, Leamington Spa, England.

## Description

This invention relates to taps and more especially this invention relates to taps for dispensing liquids from containers such as cans.

It is known from FR—A—1038027 to provide a tap for dispensing liquids, which tap comprises a hollow cylindrical body from which a spout is arranged to extend, the body being provided at one end with a screw coupling for attachment to a screw topped container, and at the other end with a valve operative for controlling in use the flow of liquid from a screw topped container through the spout. It is also known from FR—A—1038027 for the valve to comprise a substantially cylindrical obturator member which is fitted coaxially within the body, and seal means which forms a seal between an inside cylindrical surface of the body and the obturator member.

The present invention is different from FR—A—1038027 in that the present invention has a specially designed obturator member.

According to the present invention there is provided a tap for dispensing liquids, which tap comprises a hollow cylindrical body from which a spout is arranged to extend, the body being provided at one end with a screw coupling for attachment to a screw topped container, and at the other end with a valve operative for controlling in use the flow of liquid from a screw topped container through the spout, the valve comprising a substantially cylindrical obturator member which is fitted coaxially within the body, and seal means forming a seal between an inside cylindrical surface of the body and the obturator member, characterised in that the obturator member has at one end an obliquely truncated end portion which extends within the body and at the other end a handle portion which serves to facilitate angular rotation of the obliquely truncated end portion with respect to the body, whereby a flow of liquid from the container through the spout is progressively controllable consequent upon progressive occlusion of an entrance to the spout from within the body by the obliquely truncated end portion as the handle portion is angularly rotated, and the handle portion comprises a knob formed at one end of the obturator member, the knob being secured to a cylindrical portion of the obturator member, and the knob being arranged to extend over the cylindrical portion so as to define an annular groove into which one end of the body extends.

The spout may be arranged to extend orthogonally from the body.

The body and the obturator member may be provided with complementary mutually engageable locking parts which serve to hold them together.

The body and the obturator member may include mutually engaged indexing parts which serve to limit angular rotational movement of the obturator member with respect to the body.

The seal means may comprise at least one resilient sealing ring which is accommodated in a circumferential groove on the obturator member.

Alternatively, the seal means may comprise a circumferential rib formed on the obturator member.

The end of the body which extends into the annular groove and the groove itself may be respectively provided with the mutually engageable locking parts by means of which the body and the valve are held together.

Alternatively the mutually engageable locking parts may be defined by a circumferential rib on the obturator member which engages with a complementary circumferential groove on the end of the body.

The inside of the body adjacent the screw coupling may be formed to define a part annular co-axial channel into which a complementary annular end of the obliquely truncated end portion extends thereby to define the indexing parts.

The screw coupling may comprise a screw coupling nut which is fitted to one end of the body and retained by means of a circlip so as to be rotatable thereon and at least one sealing washer which fits within the nut and which serves in use to seal the tap against a screw threaded neck of a container.

Alternatively, the screw coupling may comprise a screw coupling nut which is arranged to be a captive press fit in a groove on one end of the body and to be rotatable thereon.

Embodiments of the invention will now be described solely by way of example with reference to the accompanying drawings in which:

Figure 1 is an exploded perspective view of a tap;

Figure 2 is a sectional view of a body part of the tap shown in Figure 1;

Figure 3 is an end view of the body part shown in Figure 2 and is taken in the direction of arrow A;

Figure 4 is a sectional view of a valve obturator forming part of the tap shown in Figure 1;

Figure 5 is a plan view of the valve obturator shown in Figure 4;

Figure 6 is a sectional view of an alternative tap body part;

Figure 7 is a side view of an alternative valve obturator;

Figure 8 is an underneath plan view of the valve obturator shown in Figure 7; and

Figure 9 is a side view of a further alternative valve obturator.

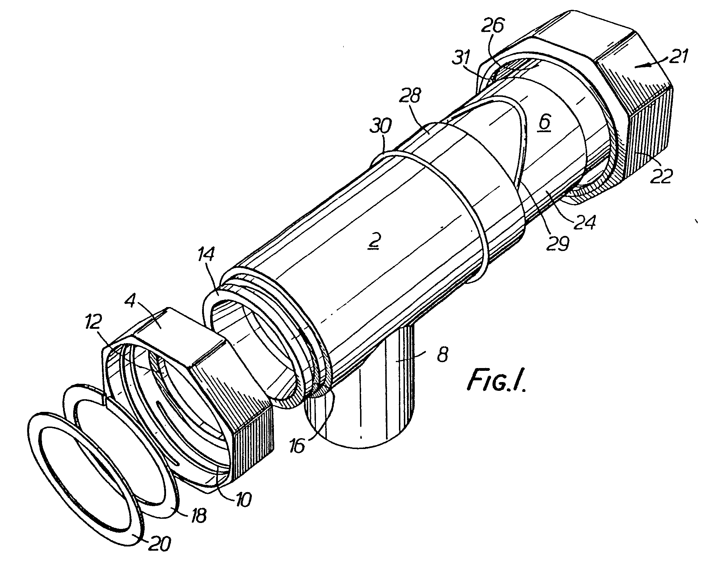

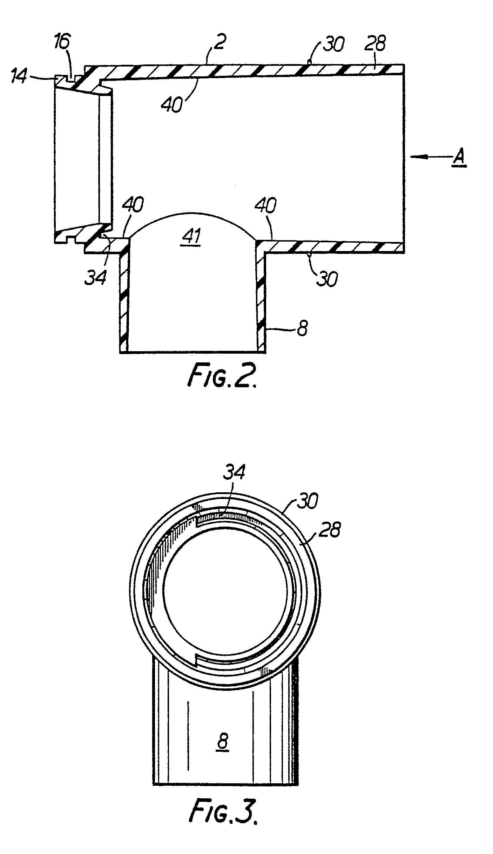

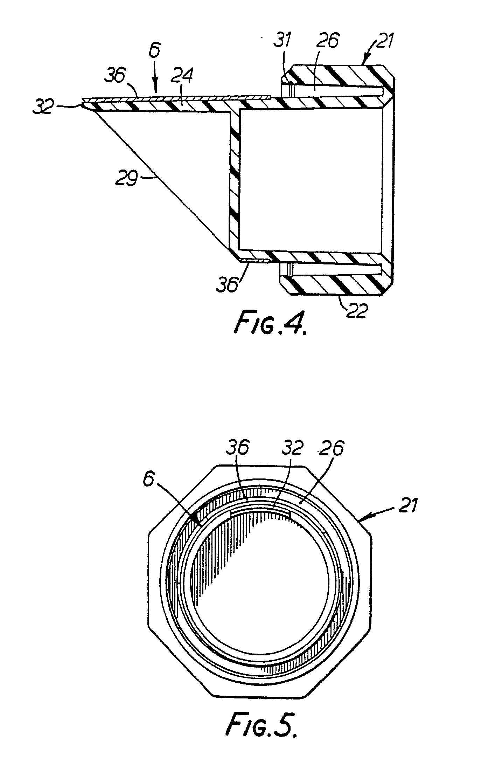

Referring now to Figures 1 to 5, a tap for a container having a screw threaded neck, comprises a plastics moulded body 2 having fitted at one end a screw coupling in the form of a moulded plastics flange nut 4. In use of the tap, the nut 4 screws over the screw threaded neck of a container (not shown) to secure the tap to the container. The other end of the body 2 is adapted to receive a plastics moulded valve obturator 6 which is operative to control the flow of liquid from the container through an integral spout 8 which extends orthogonally of the body 2. The nut 4 comprises internal screw threads 10 and a flange 12. The nut 4 is fitted to one end 14 of the body 2, the end 14 being provided with a circumferential groove 16 for a circlip 18 which serves to retain the nut 4 in position. It will be appreciated that the nut 4 is free to rotate about the body 2 and in order to effect in used a good seal with the neck of the container, a resilient sealing washer 20 is provided which fits within the nut 4.

The valve obturator 6 is provided with a knob 21 which includes an outer wall 22 and an inner cylindrical obturator part 24 so as to define therebetween an annular groove 26 into which an end portion 28 of the body 2 is received. The end portion 28 of the body 2 is formed with a circumferential rib 30 which is arranged to engage a complementary recess 31 within the groove 26 so that the recess 31 and the rib 30 comprise mutually engageable locking parts which hold the valve obturator 6 and the body 2 together.

The cylindrical obturator body 24 is provided with an obliquely truncated end portion 29 which, as shown, extends at an angle of about 45°. The obliquely truncated end portion 29 has a part annular end portion 32 which locates in a complementary channel 34 formed within the body 2 adjacent to the nut 4, thereby to define indexing means.

The cylindrical obturator body 24 is provided with a resilient sealing band 36 which bears against the inside cylindrical surface 40 of the body 2. The valve obturator 6 is rotatable within the body 2 by turning the knob 21 so that an aperture 41 at a junction between the spout 8 and the body 2 is progressively occluded as the valve obturator 6 is rotated. It will be appreciated that the limits of rotation are defined by the indexing means comprising the channel 34 and the end portion 32 of the obturator body 24.

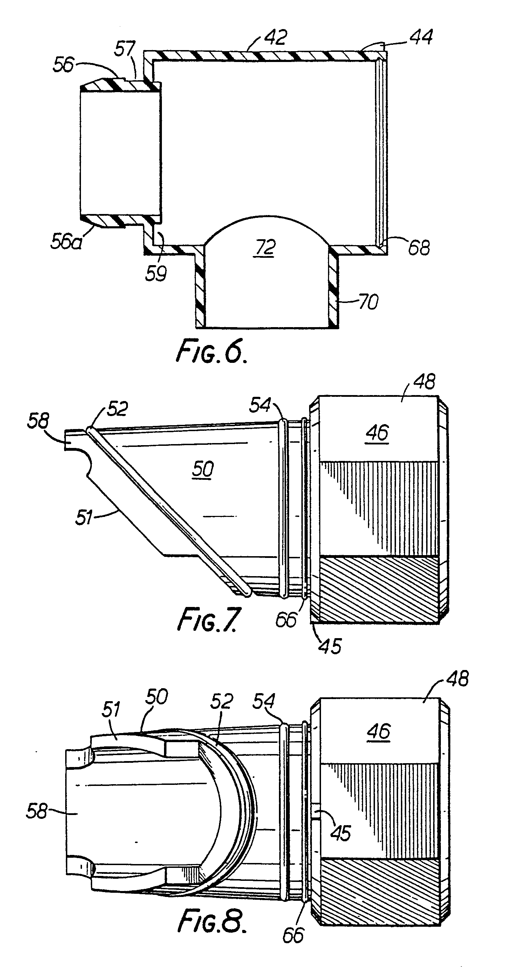

An alternative embodiment of the invention will now be described with reference to Figures 6, 7, 8 and 9, wherein an obturator member 46 is provided with a hexagonal knob 48 and a body portion 50. The body portion 50 has an obliquely truncated end portion 51 and two resilient sealing rings 52 and 54. The sealing rings 52 and 54 are accommodated in circumferential grooves defined in the cylindrical surface of the body portion 50. The sealing ring 52 extends generally parallel to the plane of the truncated end portion 51.

A body portion 42 is provided at one end with a neck part 56 to which a flange nut like the flange nut 4 is fitted. The neck part 56 is provided with a circumferential groove 57 and when the flange nut is just moulded and is hot, it is force fitted over the chamfered leading edge 56a of the neck part 56 and into the groove 57. Shrinkage of the flange nut as it cools locates the flange nut as a rotatable fixture in the groove 57.

The truncated end portion 51 has a part annular end portion 58 which is arranged to be accommodated in a groove 59 in the body portion 42.

The body portion 42 is provided with an indexing pip 44 which cooperates with an indexing pip 45 on the knob 48, whereby angular indexing is facilitated to limit rotational movement of the knob 48 and therefore rotation of the body portion 50.

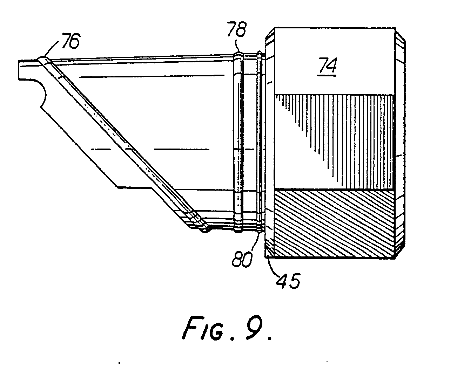

As shown in Figures 7 and 8, a circumferential integrally formed rib 66 is provided for fitting in a circumferential groove 68 (see Figure 6) in one end of the body portion 42 and to thereby rotatably retain the obturator member 46 on the body portion 42.

It will be appreciated that by providing an obturator member having an obliquely truncated end portion 51 as shown in Figure 7 and Figure 8, progressive control of fluid flow from a container to which the tap is fitted will be facilitated, the fluid flowing from a spout 70 via an aperture 72 at a junction between the spout 70 and the body 42.

Various modifications may be made to the arrangements thus far described and for example an obturator member 74 may be provided as shown in Figure 9, wherein circumferential integral formed sealing ribs 76 and 78 are provided instead of the rings 52 and 54 shown in Figure 7. The obturator member 74 of Figure 9 is still preferably provided with a rib 80 as shown, the rib 80 operating the same as the rib 66 shown in Figure 7.

**Claims**

1. A tap for dispensing liquids, which tap comprises a hollow cylindrical body (2) from which a spout (8) is arranged to extend, the body (2) being provided at one end with a screw coupling (4) for attachment to a screw topped container, and at the other end with a valve (6) operative for controlling in use the flow of liquid from a screw topped container through the spout (8), the valve (6) comprising a substantially cylindrical obturator member (6) which is fitted coaxially within the body (2), and seal means (36) forming a seal between an inside cylindrical surface of the body (2) and the obturator member (6), characterised in that the obturator member (6) has at one end an obliquely truncated end portion (29) which extends within the body (2) and at the other end a handle portion (21) which serves to facilitate angular rotation of the obliquely truncated end portion (29) with respect to the body (2), whereby a flow of liquid from the container through the spout (8) is progressively controllable consequent upon progressive occlusion of an entrance (41) to the spout (8) from within the body (2) by the obliquely truncated end portion as the handle portion (21) is angularly rotated, and the handle portion (21) comprises a knob (21) formed at one end of the obturator member (6), the knob (21) being secured to a cylindrical portion (24) of the obturator member, and the knob (21) being arranged to extend over the cylindrical portion (24) so as to define an annular groove (26) into which one end of the body (2) extends.

2. A tap as claimed in claim 1 characterised in that the spout (8) is arranged to extend orthogonally from the body (2).

3. A tap as claimed in claim 1 or claim 2 characterised in that the body (2) and the obturator member (6) are provided with complementary mutually engageable locking parts (30, 31) which serve to hold them together.

4. A tap as claimed in any preceding claim characterised in that the body (2) and the obturator member (6) include mutually engaged indexing parts (32, 34) which serve to limit angular rotation of the obturator member (6) with respect to the body (2).

5. A tap as claimed in any preceding claim characterised in that the seal means comprises at least one resilient sealing ring (52, 54) which is accommodated in a circumferential groove on the obturator member.

6. A tap as claimed in any of claims 1 to 4 characterised in that the seal means comprises a circumferential rib (36) formed on the obturator member.

7. A tap as claimed in claim 3 characterised in that the end of the body (2) which extends into the annular groove (26) and the groove (26) itself are respectively provided with the mutually engageable locking parts (30, 31) by means of which the body (2) and the valve (6) are held together.

8. A tap as claimed in claim 3 characterised in that the mutually engageable locking parts are defined by a circumferential rib (66) on the obturator member (6) which engages with a complementary circumferential groove (68) in the end of the body (2).

9. A tap as claimed in claim 4 characterised in that the inside of the body (2) adjacent the screw coupling (4) is formed to define a part annular co-axial channel (34) into which a complementary annular end (32) of the obliquely truncated end portion (29) extends thereby to define the indexing parts.

10. A tap as claimed in any of claims 1 to 9 characterised in that the screw coupling (4) comprises a screw coupling nut (4) which is arranged to be a captive press fit in a groove (16) on one end of the body (2) and to be rotatable thereon.

**Patentansprüche**

1. Zapfhahn zum Abgeben von Flüssigkeiten mit einem hohlzylindrischen Körper (2), von dem eine Ausgußtülle ausgeht, wobei der Körper (2) an einem Ende mit einer Schraubkupplung (4) zum Befestigen an einem an der Oberseite mit einem Schraubanschluß versehenen Behälter ausgestattet ist, während am anderen Ende ein Absperrorgan (6) angebracht ist, das bei der Anwendung der Steuerung der Flüssigkeitsströmung aus dem Behälter durch die Ausgußtülle (8) dient und das ein im wesentlichen zylindrisches Verschlußglied (6) aufweist, das koaxial in dem Körper (2) sitzt, und ferner Abdichtmittel (36) aufweist, die eine Abdichtung zwischen einer inneren zylindrischen Fläche des Körpers (2) und dem Verschlußglied (6) bilden, dadurch gekennzeichnet, daß das Verschlußglied (6) an einem Ende einen schräg abgeschnittenen Endabschnitt (29) aufweist, der sich innerhalb des Körpers (2) erstreckt, und am anderen Ende einen Griffabschnitt (21) aufweist, der dazu dient, ein Verdrehen des schräg abgeschnittenen Endabschnitts (29) in bezug auf den Körper (2) zu erleichtern, wodurch ein Strömen von Flüssigkeit aus dem Behälter durch die Ausgußtülle (8) als Folge eines fortschreitenden Verschleißens einer Eingangsöffnung (41) zu der Ausgußtülle (8) vom Inneren des Körpers (2) durch den schräg abgeschnittenen Endabschnitt fortschreitend steuerbar wird, wenn der Griffabschnitt (21) gedreht wird, und daß der Griffabschnitt (21) einen Knopf (21) aufweist, der an einem Ende des Verschlußglieds (6) angebracht ist und der an einem zylindrischen Abschnitt (24) des Verschlußglieds befestigt ist, wobei der Knopf (21) so angeordnet ist, daß er sich über den zylindrischen Abschnitt (24) so erstreckt, daß eine Ringnut (26) entsteht, in die ein Ende des Körpers (2) ragt.

2. Zapfhahn nach Anspruch 1, dadurch gekennzeichnet, daß die Ausgußtülle (8) so angeordnet ist, daß sie rechtwinklig vom Körper (2) absteht.

3. Zapfhahn nach Anspruch 1 oder 2, dadurch gekennzeichnet, daß der Körper (2) und das Verschlußglied (6) mit komplementären, gegenseitig ineinander eingreifbaren Verriegelungsteilen (30, 31) ausgestattet sind, die dazu dienen, die beiden Teile zusammenzuhalten.

4. Zapfhahn nach einem der vorhergehenden Ansprüche, dadurch gekennzeichnet, daß der Körper (2) und das Verschlußglied (6) gegenseitig aufeinander einwirkende Schaltteile (32, 34) enthalten, die dazu dienen, die Winkelverdrehung des Verschlußglieds (6) bezüglich des Körpers (2) zu begrenzen.

5. Zapfhahn nach einem der vorhergehenden Ansprüche, dadurch gekennzeichnet, daß die Abdichtmittel wenigstens einen elastischen Dichtring (52, 54) enthalten, der in einer Umfangsnut am Verschlußglied untergebracht ist.

6. Zapfhahn nach einem der Ansprüche 1 bis 4, dadurch gekennzeichnet, daß die Abdichtmittel eine Umfangsrippe (36) aufweisen, die an dem Verschlußglied angeformt ist.

7. Zapfhahn nach Anspruch 3, dadurch gekennzeichnet, daß das in die Ringnut (26) ragende Ende des Körpers (2) und die Ringnut (26) selbst jeweils mit gegenseitig ineinandergreifenden Sperrteilen (30, 31) ausgestattet sind, mit deren Hilfe der Körper (2) und das Absperrorgan (6) zusammengehalten werden.

8. Zapfhahn nach Anspruch 3, dadurch gekennzeichnet, daß die gegenseitig ineinandergreifenden Sperrteile von einer Umfangsrippe (66) am Verschlußglied (6) gebildet sind, die mit einer komplementären Umfangsnut (68) in dem Ende des Körpers (2) in Eingriff steht.

9. Zapfhahn nach Anspruch 4, dadurch gekennzeichnet, daß die an die Schraubkupplung (4) angrenzende Innenseite des Körpers (2) so geformt ist, daß sie einen Teil eines ringförmigen, koaxialen Kanals (34) bildet, in den ein komplementäres, ringförmiges Ende (32) des schräg abgeschnittenen Endabschnitts (29) ragt, wodurch die Schaltteile gebildet werden.

10. Zapfhahn nach einem der Ansprüche 1 bis 9, dadurch gekennzeichnet, daß die Schraubkupplung (4) eine Schraubkupplungsmutter (4) aufweist, die so angeordnet ist, daß sie einen festhaltenden Preßsitz in einer Nut (16) an einem Ende des Körpers (2) bildet und auf diesem drehbar ist.

## Revendications

1. Robinet de distribution de liquides, qui comprend un corps cylindrique creux (2) depuis lequel s'étend un tuyau de décharge (8), ce corps (2) étant pourvu, à une extrémité, d'un manchon à vis (4) pour sa fixation à un réservoir comportant un collet supérieur fileté, et, à son autre extrémité, d'une vanne (6) capable de régler, lors de l'utilisation, l'écoulement du liquide depuis un réservoir à collet supérieur fileté à travers le tuyau de décharge (8), la vanne (6) comprenant un élément obturateur essentiellement cylindrique (6) qui est monté coaxialement au corps (2), et un moyen d'étanchéité (36) formant un joint entre une surface cylindrique intérieure du corps (2) et l'élément obturateur (6), caractérisé en ce que l'élément obturateur (6) comporte, à une extrémité, une partie terminale tronquée obliquement (29) qui s'étend à l'intérieur du corps (2) et, à l'autre extrémité, une partie formant poignée (21) qui sert à faciliter la rotation angulaire de la partie extrême tronquée obliquement (29) par rapport au corps (2), de sorte qu'un écoulement de liquide depuis le réservoir à travers le tuyau de décharge (8) est progressivement réglable par suite d'une fermeture progressive d'une entrée (41) au tuyau de décharge (8) depuis l'intérieur du corps (2) par la partie terminale tronquée obliquement lorsque la partie formant poignée (21) est amenée à tourner angulairement, et en ce que la partie formant poignée (21) comprend un bouton (21) formé à une extrémité de l'élément obturateur (6), ce bouton (21) étant fixé à une partie cylindrique (24) de l'élément obturateur, ce bouton (21) étant agencé pour s'étendre par-dessus la partie cylindrique (24) de manière à créer une rainure annulaire (26) dans laquelle s'étend une extrémité du corps (2).

2. Robinet suivant la revendication 1, caractérisé en ce que le tuyau de décharge (8) est agencé pour s'étendre perpendiculairement au corps (2).

3. Robinet suivant la revendication 1 ou la revendication 2, caractérisé en ce que le corps et l'élément obturateur (6) sont pourvus de parties de blocage complémentaires (30, 31) qui coopèrent l'une avec l'autre et servant à maintenir ces éléments ensemble.

4. Robinet suivant l'une quelconque des revendications précédentes, caractérisé en ce que le corps (2) et l'élément obturateur (6) comportent des parties d'indexage (32, 34) coopérant entre elles et servant à limiter la rotation angulaire de l'élément obturateur (6) par rapport au corps (2).

5. Robinet suivant l'une quelconque des revendications précédentes, caractérisé en ce que le moyen d'étanchéité comprend au moins une bague d'étanchéité élastique (52, 54) qui s'adapte dans une rainure circonférentielle prévue sur l'élément obturateur.

6. Robinet suivant l'une quelconque des revendications 1 à 4, caractérisé en ce que le moyen d'étanchéité comprend une nervure circonférentielle (36) formée sur l'élément obturateur.

7. Robinet suivant la revendication 3, caractérisé en ce que l'extrémité du corps (2) qui s'étend dans la rainure annulaire (26) et la rainure (26) elle-même sont pourvues respectivement des pièces de blocage coopérantes (30, 31) grâce auxquelles le corps (2) et la vanne (6) sont maintenus ensemble.

8. Robinet suivant la revendication 3, caractérisé en ce que les pièces de blocage coopérantes sont formées par une nervure circonférentielle (66) prévue sur l'élément obturateur (6) et qui s'engage dans une nervure circonférentielle complémentaire (68) prévue dans l'extrémité du corps (2).

9. Robinet suivant la revendication 4, caractérisé en ce que l'intérieur du corps (2) au voisinage du manchon à vis (4) est conformé pour présenter un canal coaxial annulaire (34) dans lequel s'étend une extrémité annulaire complémentaire (32) de la partie extrême tronquée obliquement (29), en constituant ainsi des pièces d'indexage.

10. Robinet suivant l'une quelconque des revendications 1 à 9, caractérisé en ce que le manchon à vis (4) comprend un écrou d'accouplement à vis (4) qui est agencé en vue d'une montage captif sous pression dans une rainure (16) prévue sur une extrémité du corps (2), afin de pouvoir tourner sur celui-ci.

Fig.I.

FIG.2.

FIG.3.

FIG.4.

FIG.5.

FIG.6.

FIG.7.

FIG.8.

FIG. 9.